# FASCICULE DE BREVET EUROPEEN

(11) **EP 3 880 447 B1**
(45) Date de publication et mention de la délivrance du brevet: **19.07.2023**
(21) Numéro de dépôt: 19835710.5
(22) Date de dépôt: 29.11.2019
(51) Int. Cl.: B29C 70/44, B29C 70/34, B29C 70/54, B29C 43/36, B29K 105/08

(54) **PROCEDE DE FABRICATION D'UNE PIECE EN MATERIAU COMPOSITE**
VERFAHREN ZUR HERSTELLUNG EINES AUS EINEM VERBUNDSTOFFMATERIAL GEFERTIGTEN TEILS
METHOD FOR MANUFACTURING A PART MADE FROM COMPOSITE MATERIAL

(30) Priorité: 21.12.2018 FR 1873868
(43) Date de publication de la demande: 22.09.2021
(73) Titulaire: SAFRAN, 75015 Paris (FR)
(72) Inventeur: DUNAUD, Sébastien, 77550 Moissy-Cramayel (FR); COULAUD, Magali, 77550 Moissy-Cramayel (FR)
(74) Mandataire: Brevalex
(86) Numéro de dépôt international: PCT/FR2019/052850
(87) Numéro de publication internationale: WO 2020/128183

(56) Documents cités:
- EP-A1- 0 860 268
- EP-A1- 3 597 415
- JP-A- H07 108 529
- US-B2- 6 391 246

## Description

### DOMAINE TECHNIQUE

La présente invention concerne la fabrication de pièces en matériau composite formées par empilement de couches de matériau fibreux préimprégnés placés sur un outil formant modèle pour constituer une préforme, et couverts d'une bâche avant mise sous vide et chauffage de l'ensemble pour polymériser la préforme.

### TECHNIQUE ANTÉRIEURE

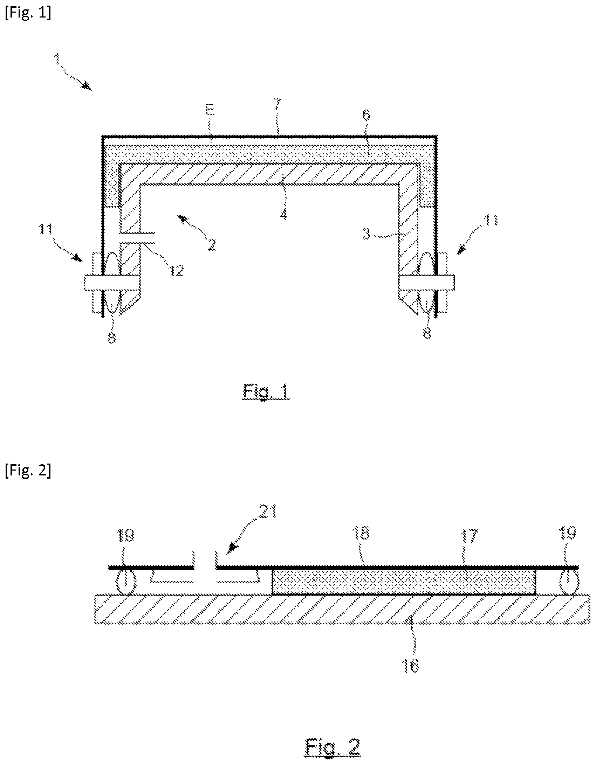

Sur la figure 1, une installation 1 de fabrication d'une pièce en matériau composite représentée très schématiquement, montre un outil formant modèle 2 en forme de caisson comportant des parois latérales 3 et une paroi supérieure 4, utilisé pour mettre en forme un empilement 6 de couches de matériau préimprégné.

L'empilement 6 s'étend sur la paroi supérieure 4 en ayant ses bords rabattus sur les parois latérales 3, et il constitue, une fois installé comme sur la figure 1, la préforme de la pièce à fabriquer. Dans le cas de la figure 1, la pièce a symboliquement une forme de caisson dont la surface interne est délimitée par les faces externes de l'outil 2.

L'empilement 6 est formé de couches dites de préimprégné, c'est-à-dire de tissu ou d'agencement fibreux, par exemple en fibres de carbone, préimprégnées d'une matrice polymérisable, complété par des éléments de marouflage. La polymérisation est obtenue typiquement par réchauffement à une température donnée pendant une durée prédéterminée.

Pour accroître la tenue mécanique de la pièce, la polymérisation est réalisée en pressurisant l'empilement 6, pour minimiser la densité de matrice et accroître la densité de fibres. Cette pressurisation est assurée en couvrant l'empilement 6 avec une bâche 7 dont le pourtour est hermétiquement raccordé à la face externe de l'outil 2, pour délimiter une enceinte étanche E autour de l'empilement 6.

En pratique, le raccordement hermétique du pourtour de la bâche 7 avec la face externe de l'outil 2 est obtenu en intercalant un joint de mastic 8, et le maintien de la bâche 7 est assuré par des vis 9, 11 traversant conjointement cette bâche et le joint de mastic 8 en étant vissées à travers l'outil 2.

La pressurisation de l'empilement 6 est obtenue en établissant le vide dans l'enceinte E, l'outil 2 comportant à cet effet une buse ou une valve 12 de raccordement à une pompe à vide non représentée.

Dans le cas d'une pièce généralement plane, illustré schématiquement sur la figure 2, l'agencement qui est analogue comporte un outil 16 généralement plan supportant un empilement de couches 17 couvert par une bâche 18 dont les bords sont hermétiquement raccordés à l'outil 16 par un joint de mastic 19, sans vis de maintien de la bâche.

Dans le cas de la figure 2, la valve repérée par 21, de raccordement à une pompe à vide non représentée, équipe la bâche au lieu d'équiper l'outil.

D'une manière générale, l'évolution des matériaux composite nécessite d'accroître la température de polymérisation, alors que la température acceptable pour les bâches actuelles est limitée en deçà des températures de polymérisation recherchées. En pratique, les bâches actuelles résistent à 320°C alors que les matériaux composites dits haute température ont une température de polymérisation de 400°C, sous 15 bars.

Il existe des bâches en polyimide conçues pour supporter 400°C, mais ces bâches se déchirent facilement lorsqu'utilisées pour la fabrication d'une pièce de géométrie complexe telle que celle de la figure 1, ou lorsqu'elles doivent être percées pour installer une valve comme dans le cas de la figure 2.

Dans ce cadre, le but de l'invention est d'apporter une solution pour réaliser une mise sous vide sous une température supérieure à 320°C pour fabriquer une pièce de géométrie complexe ou pour faciliter l'intégration d'une valve dans le cas d'une géométrie simple.

Le document US 6391246 B2 divulgue par ailleurs un procédé de fabrication d'une pièce en matériau composite conformément au préambule de la revendication 1.

### EXPOSÉ DE L'INVENTION

A cet effet, l'invention a pour objet un procédé de fabrication d'une pièce en matériau composite, conformément à la revendication 1.

Avec cette solution, les coupons en silicone ou élastomère adoucissent les formes anguleuses, et ils sont au contact direct de la bâche, de sorte qu'ils augmentent sa tenue mécanique dans les zones de concentration de contraintes où ils sont placés.

L'invention concerne également un procédé ainsi défini, comprenant préalablement à l'installation de la bâche, une étape d'équipement de l'outil avec une valve équipant l'outil, et d'application d'un coupon sur la valve équipant l'outil.

L'invention concerne également un procédé ainsi défini, dans lequel la valve comporte un corps et un tube de raccordement, dans lequel la bâche comporte un trou de passage du tube de raccordement, et dans lequel le coupon appliqué sur la valve présente des dimensions supérieures à celles du corps et comporte un trou central de centrage et de passage du tube de raccordement.

L'invention concerne également un procédé ainsi défini, dans lequel l'outil a une forme générale de caisson.

L'invention concerne également un procédé ainsi défini, dans lequel l'outil a une forme généralement plane.

### BRÈVE DESCRIPTION DES DESSINS

[Fig. 1] déjà décrite est une représentation schématique montrant une installation pour fabriquer une pièce composite de géométrie complexe selon l'Etat de la technique ;
[Fig. 2] déjà décrite est une représentation schématique montrant une installation pour fabriquer une pièce composite simple avec intégration d'une valve de mise sous vide à la bâche selon l'Etat de la technique ;
[Fig. 3] est une représentation schématique de mise en oeuvre de l'invention pour fabriquer une pièce composite haute température de géométrie complexe ;
[Fig. 4] est une représentation schématique de mise en oeuvre de l'invention pour fabriquer une pièce composite simple haute température avec intégration d'une valve de mise sous vide à la bâche ;
[Fig. 5] est une vue de dessus de l'intégration d'une valve à une bâche conformément à une mise en oeuvre de l'invention;
[Fig. 6] est une vue en coupe de l'intégration d'une valve à une bâche conformément à une mise en oeuvre de l'invention.

### DESCRIPTION DETAILLEE

L'idée à la base de l'invention est de mettre en oeuvre deux matériaux permettant par synergie d'éviter la dégradation thermique de l'un et d'augmenter la résistance mécanique de l'autre. Concrètement, l'association d'une bâche en polyimide avec des coupons en silicone appliqués sur les parties anguleuses de la préforme et/ou de l'outillage permet de constituer une poche à vide supportant une température de cuisson de 400°C sous 15 bars, sans risque de déchirement ou autre dégradation de cette bâche.

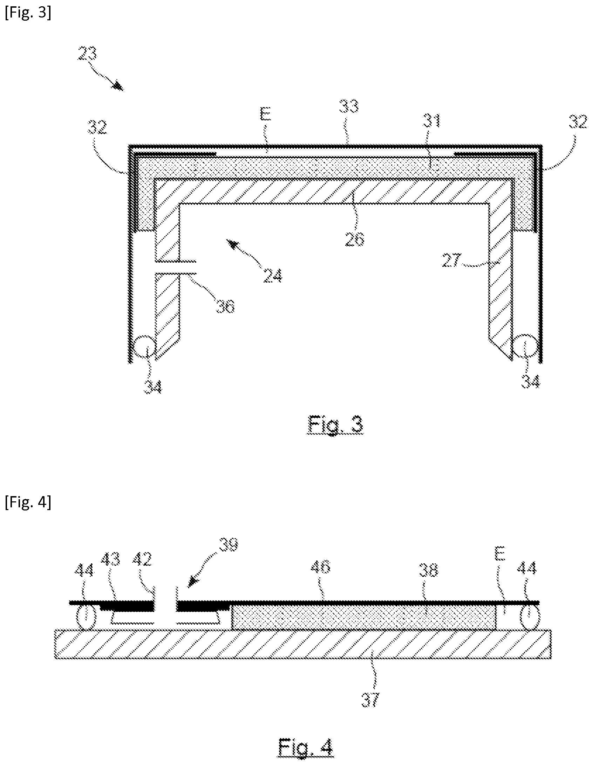

Sur la figure 3, l'installation 23 de fabrication d'une pièce en matériau composite comporte un outil formant modèle 24 comprenant une paroi supérieure 26 généralement plane à contour carré ou rectangulaire prolongée par des parois latérales 27 disposées selon un agencement en cadre qui entoure la paroi supérieure en la prolongeant.

Cet outil 24 a ainsi une forme générale de caisson dont la surface externe délimite la surface interne d'une pièce à fabriquer. Il comporte de fait plusieurs portions anguleuses, à savoir quatre arêtes dont deux sont repérées par 28 et 29, ainsi que quatre sommets non visibles sur la vue en coupe que constitue la figure 3 qui constitue une géométrie dite complexe dans ce domaine.

Lors de la fabrication, des couches de matériaux préimprégnés sont empilées sur la face supérieure de la paroi 26 en s'étendant au-delà de celle-ci pour déborder le long des parois latérales 27 afin de constituer une préforme de la pièce à fabriquer, cet empilement étant repéré par 31 sur la figure 3.

Complémentairement, des éléments de marouflage non représentés, couvrant localement certaines parties de la préforme pour par exemple y modifier localement son épaisseur ou sa forme sont ajoutés à l'empilement de couches de préimprégné.

Selon l'invention, les portions anguleuses de la préforme définie par l'empilement 31 et par l'outil 24 sont ensuite recouvertes localement par des coupons en silicone, repérés par 32 sur la figure 3, de manière à adoucir ces formes anguleuses. Ces coupons permettent ainsi de limiter les concentrations de contraintes de la bâche qui sera ensuite installée, et par là même le risque de déchirure ou d'endommagement de cette bâche durant le cycle de polymérisation.

Comme visible sur la figure, les coupons silicone sont placés dans les zones susceptibles de déchirer la bâche polyimide, c'est-à-dire sur les coins et angles de la pièce à fabriquer et/ou de l'outillage utilisé. Les coupons sont ici des carrés de 120 mm de côté, mais leur taille et leur forme sont conditionnées par l'anatomie et les dimensions de la pièce à fabriquer.

Une fois que les coupons en silicone 32 ont été mis en place, une bâche en polyimide 33 est installée sur l'ensemble formé par l'outil 24 avec l'empilement 31 ainsi que les éléments de marouflage non représentés et les coupons en silicone 32, et les bords de cette bâche sont raccordés hermétiquement à l'outil 16 par un joint de mastic 34.

Lorsque tous ces composants sont complètement configurés, c'est-à-dire installés aux positions appropriées et contrôlés, l'enceinte étanche E entourant l'empilement 31 est mise sous vide au moyen d'une pompe à vide raccordée à une valve 36 équipant l'outil 24.

Cette mise sous vide permet de mettre en contact direct la face externe de chaque coupon de silicone avec la paroi en polyimide. En effet, sur les figures, l'ensemble est représenté avant mise au vide de l'enceinte E, mais lorsque le vide est fait dans l'enceinte E, la bâche épouse la forme de la préforme et des coupons, pour adopter une forme dans laquelle elle est entièrement en appui sur ces éléments, l'enceinte E ayant alors un volume pour ainsi dire nul.

Lors du processus de mise sous vide et de chauffage, les coupons de silicone ou de matériau élastomère peuvent ainsi se solidariser à la bâche en polyimide, contribuant à accroître sa tenue mécanique dans les zones de géométrie complexe, c'est-à-dire les zones générant une concentration de contraintes dans la bâche.

Dans l'exemple de la pièce plane, illustré sur la figure 4, l'outil 37 a une forme généralement plane, et des couches de matériaux préimprégnés sont empilées sur sa face supérieure afin de constituer une préforme de la pièce à fabriquer, cet empilement étant repéré par 38. Là aussi, des éléments de marouflage non représentés, peuvent être ajoutés localement sur certaines parties.

Comme visible sur la figure 4, une valve 39 est également installée au voisinage d'un bord de l'empilement 38 constituant la préforme, en étant dans un premier temps posée à plat sur la face supérieure de l'outil 37.

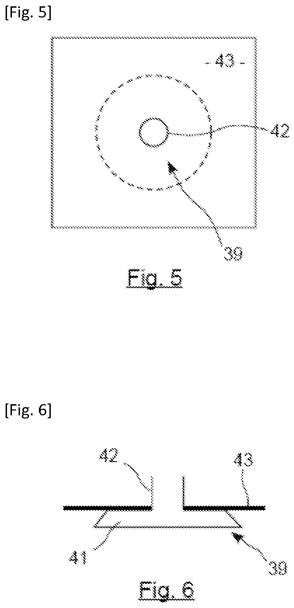

Comme visible plus en détails sur les figures 5 et 6, cette valve 39 comporte un corps 41 généralement plan équipé d'un tube de raccordement 42 qui dépasse perpendiculairement de son corps 41, ce tube 42 étant destiné à traverser un trou correspondant de la bâche pour pouvoir être raccordé à la pompe à vide non représentée.

Afin de renforcer la zone correspondant au trou de la bâche en polyimide destiné à être traversé par le tube 42, un coupon en silicone 43 comportant lui aussi un trou central est d'abord rapporté sur la face supérieure de la valve 39, à savoir la face qui est en vis-à-vis de la bâche sur la figure 4, en dépassant largement au-delà des contours du corps 41. Ce coupon 43 permet ainsi d'adoucir l'arête circulaire externe du corps 41, pour assurer qu'elle ne puisse pas constituer une partie saillante susceptible d'endommager la bâche.

Une fois que la valve 39 est complètement installée, un joint de mastic 44 est appliqué sur la face supérieure de l'outil 37, tout autour de l'ensemble constitué par l'empilement 38 et la valve 39 qui lui est contiguë.

Lorsque l'ensemble est prêt, la bâche en polyimide 46, dans laquelle un trou a préalablement été formé pour le tube 42, est appliquée sur l'ensemble, en plaçant le tube dans le trou, et de manière à couvrir l'empilement 38 ainsi que la valve 39 et le joint de mastic 44.

Le coupon en silicone 43 qui couvre le corps de la valve est ainsi au contact direct de la bâche en polyimide lorsque le vide est fait dans l'enceinte E. L'établissement du vide dans l'enceinte délimitée par la bâche en polyimide et l'outil permet ainsi de plaquer fermement la bâche en polyimide contre le coupon en silicone 43. Ainsi, les coupons se solidarisent à la bâche pour la renforcer mécaniquement afin d'éviter qu'elle ne se déchire dans sa partie affaiblie par le trou que le tube 42 traverse.

D'une manière générale, les coupons en silicone permettent d'adoucir les formes saillantes de la préforme et/ou de l'outillage utilisé, ce qui permet de limiter les concentrations de contraintes de la bâche lorsqu'elle est mise sous vide. Par ailleurs, la mise en contact intime du silicone avec la bâche appuyant sur les coupons permet de conjointement protéger thermiquement les coupons et de renforcer mécaniquement la tenue de la bâche en polyimide en solidarisant les coupons à la bâche.

Les coupons de silicone utilisés, encore appelés patchs, sont renforcés par des fibres de verre, ces coupons pouvant être formés de parties de bâche en silicone renforcée par des fibres de verre.

Dans l'exemple qui a été décrit, les coupons sont en silicone, mais des coupons formés par tout autre matériau élastomère, renforcé par des fibres longues, résistant à la température requise peuvent convenir, selon l'application spécifique qui est faite de l'invention.

Par ailleurs, l'invention a été décrite pour une bâche en polyimide, mais s'applique à toute bâche comprenant au moins un polyimide et/ou un composé de la famille des phtalonitriles.

## Revendications

1. Procédé de fabrication d'une pièce en matériau composite, comportant les étapes de :
- application sur un outil (24, 37) de couches de matériau composite (31, 38) préimprégné pour constituer une préforme ;
- installation d'une bâche (33, 46) sur la préforme et liaison étanche de cette bâche (33, 46) à l'outil (24, 37) avec du mastic (34, 44) ;
- mise sous vide de l'enceinte (E) délimitée par la bâche (33, 46) et l'outil (24, 37) contenant la préforme ;
- chauffage de l'ensemble à une température donnée pendant une durée prédéterminée pour polymériser les couches de matériau composite préimprégnées (31, 38) ;
le procédé comportant une étape d'application d'au moins un coupon (32, 43) en matériau de type silicone ou élastomère sur au moins une zone de l'outil (24, 37) et/ou de la préforme ayant une géométrie complexe, préalablement à l'installation de la bâche(33, 46) ;
et la bâche (33, 46) étant une bâche comprenant au moins un polyimide et/ou au moins un composé de la famille des phtalonitriles; **caractérisé en ce que** la géométrie complexe est une géométrie complexe saillante,
et **en ce que** on utilise des coupons (32, 43) en matériau de type silicone ou élastomère renforcé par des fibres de verre longues.

2. Procédé selon la revendication 1, comprenant préalablement à l'installation de la bâche, une étape d'équipement de l'outil avec une valve (39) équipant l'outil, et d'application d'un coupon (43) sur la valve (39) équipant l'outil.

3. Procédé selon la revendication 2, dans lequel la valve (39) comporte un corps (41) et un tube de raccordement (42), dans lequel la bâche comporte un trou de passage du tube de raccordement (42), et dans lequel le coupon (43) appliqué sur la valve (39) présente des dimensions supérieures à celles du corps (41) et comporte un trou central de centrage et de passage du tube de raccordement (42).

4. Procédé selon l'une des revendications précédentes, dans lequel l'outil (24) a une forme générale de caisson.

5. Procédé selon l'une des revendications 1 à 3, dans lequel l'outil (37) a une forme généralement plane.

## Patentansprüche

1. Verfahren zur Herstellung eines Teils aus Verbundstoffmaterial, welches die Schritte beinhaltet zum:
- Auftragen auf einem Werkzeug (24, 37) von Schichten aus vorab imprägniertem Verbundmaterial (31, 38), um einen Vorformling zu bilden;
- Installieren einer Plane (33, 46) auf dem Vorformling und dichtes Anbinden dieser Plane (33, 46) mit dem Werkzeug (24, 37) mit Dichtmasse (34, 44);
- Unter Vakuum setzen des Einschlusses (E), der von der Plane (33, 46) und dem Werkzeug (24, 37) begrenzt wird, welcher den Vorformling enthält;
- Erhitzen der Einheit auf eine gegebene Temperatur, eine vorbestimmte Zeit lang, um die vorab imprägnierten Verbundmaterialschichten (31, 38) zu polymerisieren;
wobei das Verfahren einen Schritt zum Auftragen von mindestens einem Coupon (32, 43) aus einem Material in der Art von Silikon oder Elastomer auf mindestens einer Zone des Werkzeugs (24, 37) und/oder des Vorformlings beinhaltet, die eine komplexe Geometrie aufweist, vor dem Installieren der Plane (33, 46); und
- die Plane (33, 46) eine Plane ist, die mindestens ein Polyimid und/oder mindestens eine Verbindung aus der Familie der Phtalonitrile umfasst;
**dadurch gekennzeichnet, dass** die komplexe Geometrie eine hervorstehende komplexe Geometrie ist;
und dadurch, dass Coupons (32, 43) aus einem Material in der Art von Silikon oder einem mit langen Glasfasern verstärkten Elastomer verwendet werden.

2. Verfahren nach Anspruch 1, das vor dem Installieren der Plane einen Schritt zum Bestücken des Werkzeugs mit einem das Werkzeug bestückenden Ventil (39), und zum Auftragen eines Coupons (43) auf dem das Werkzeug bestückenden Ventil (39) umfasst.

3. Verfahren nach Anspruch 2, wobei das Ventil (39) einen Körper (41) und ein Anschlussrohr (42) beinhaltet, wobei die Plane ein Loch zum Durchführen des Anschlussrohres (42) beinhaltet, und wobei der auf dem Ventil (39) aufgetragene Coupon (43) Abmessungen aufweist, die größer als jene des Körpers (41) sind, und ein zentrales Loch zum Zentrieren und Durchführen des Anschlussrohres (42) beinhaltet.

4. Verfahren nach einem der vorstehenden Ansprüche, wobei das Werkzeug (24) eine allgemeine Kastenform aufweist.

5. Verfahren nach einem der Ansprüche 1 bis 3, wobei das Werkzeug (37) eine im Allgemeinen ebene Form aufweist.

## Claims

1. A method for manufacturing a composite material part, including the steps of:
- applying, to a tool (24, 37), layers of prepreg composite material (31, 38) to constitute a preform;
- installing a tarpaulin (33, 46) on the preform and sealingly connecting this tarpaulin (33, 46) to the tool (24, 37) with sealant (34, 44);
- vacuuming the enclosure (E) delimited by the tarpaulin (33, 46) and the tool (24, 37) containing the preform;
- heating the assembly to a given temperature for a predetermined duration to polymerise the layers of prepreg composite material (31, 38);
the method comprising a step of applying at least one remnant (32, 43) made of silicone or elastomer type material to at least one area of the tool (24, 37) and/or the preform having a complex geometry, prior to the installation of the tarpaulin (33, 46), the tarpaulin (33, 46) being a tarpaulin comprising at least one polyimide and/or at least one compound of the family of phthalonitriles,
**characterized in that** the complex geometry is a projecting complex geometry, and **in that** the remnants (32, 43) that are used are made of silicone or elastomer type material reinforced with long glass fibers.

2. The method according claim 1, comprising prior to the installation of the tarpaulin, a step of equipping the tool with a valve (39) equipping the tool, and of applying a remnant (43) to the valve (39) equipping the tool.

3. The method according claim 2, wherein the valve (39) includes a body (41) and a connecting tube (42), wherein the tarpaulin includes a hole for the passage of the connecting tube (42), and wherein the remnant (43) applied to the valve (39) has dimensions greater than those of the body (41) and includes a central hole for the centering and passage of the connecting tube (42).

4. The method according any of the previous claims, wherein the tool (24) has the general shape of a box.

5. The method according to one of claims 1 to 3, wherein the tool (37) has a generally planar shape.
